# FASCICULE DE BREVET EUROPEEN

(11) **EP 1 518 612 B1**
(45) Date de publication et mention de la délivrance du brevet: **25.06.2008**
(21) Numéro de dépôt: 04364062.2
(22) Date de dépôt: 24.09.2004
(51) Int. Cl.: B08B 3/02, A01K 1/01

(54) **Installation de lavage d'objets comportant une grille**
Waschanlage für einen Rost aufweisende Gegenstände
Washing device for objects comprising a grid

(30) Priorité: 25.09.2003 FR 0311209
(43) Date de publication de la demande: 30.03.2005
(73) Titulaire: Morvan, Jean-Marc, 29600 Ploujean-Morlaix (FR); Morvan, Roger, 29600 Plourin-Les-Morlaix (FR)
(72) Inventeur: Morvan, Jean-Marc, 29600 Ploujean-Morlaix (FR); Morvan, Roger, 29600 Plourin-Les-Morlaix (FR)
(74) Mandataire: Bomer, Françoise Marie

(56) Documents cités:
- EP-A- 1 312 419
- WO-A-00/36904
- DE-A- 4 440 483
- US-A- 4 981 268
- US-A- 5 255 853

## Description

La présente invention concerne une installation de lavage d'objets comportant une grille, notamment des caillebotis.

Elle trouve une application particulière dans le lavage des caillebotis d'élevage d'animaux, tels que des porcs ou de la volaille.

Telles installations sont connues du documents WO-A-00/36904, EP-A-1 312 419 et US-A-4 981 268.

Ces caillebotis généralement réalisés en matière plastique ou en métal sont disposés dans les bâtiments d'élevage à une faible distance du sol, de sorte que les excréments des animaux qui se trouvent dessus passent au travers et sont recueillis sur le sol.

Ces caillebotis doivent être lavés à intervalles réguliers pour des raisons d'hygiène.

Actuellement, ce lavage est effectué par un opérateur qui les démonte et les nettoie un par un et recto verso, à l'aide d'un nettoyeur haute pression, par exemple un nettoyeur connu sous la marque déposée "Kärcher", pulvérisant un jet d'eau chaude (à environ 70°C).

Cette façon de procéder est longue, fastidieuse et répétitive. Elle entraîne une consommation d'eau importante.

De plus, le nettoyeur sous haute pression est un appareil bruyant qui rend extrêmement pénible le travail de l'opérateur.

En outre, lors de ce lavage, les excréments (fientes) sont souvent pulvérisés sous l'action du jet haute pression et entraînés en suspension dans les gouttelettes d'eau à haute température, de sorte que l'opérateur risque alors d'inhaler des particules nocives préjudiciables à sa santé.

Enfin, ces caillebotis présentent une surface irrégulière, avec de nombreux recoins où peuvent s'accumuler les boues et les fientes. Ils sont donc difficiles à nettoyer correctement.

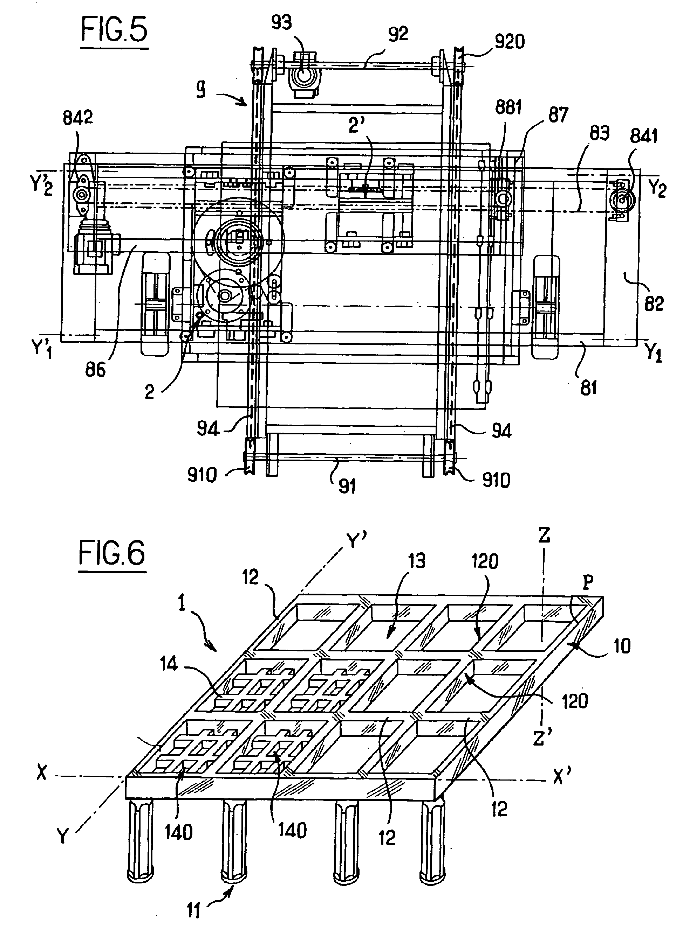

La figure 6 jointe représente à titre d'exemple purement illustratif, un modèle particulier de caillebotis d'élevage de canards.

Ce caillebotis 1 comprend une grille supérieure 10 horizontale dont l'un des côtés est muni de plusieurs pieds latéraux verticaux 11, ici au nombre de quatre.

Chaque pied 11 possède généralement une section cruciforme de sorte que des excréments peuvent se loger entre deux de ses branches voisines.

La grille supérieure 10 est constituée d'une série de lamelles verticales ou sensiblement verticales 12 dites "principales" qui se croisent à angle droit pour définir des alvéoles 13.

A l'intérieur de chaque alvéole 13, une autre série de lamelles verticales ou sensiblement verticales 14, dites "secondaires" se croisent également à angle droit. Sur la figure, à des fins de simplification, ces lamelles verticales 14 ont été représentées en détails uniquement dans quatre alvéoles 13. Elles sont en réalité présentes dans toutes les alvéoles.

Les lamelles verticales 12 et 14 présentent des faces latérales verticales opposées, référencées respectivement 120 et 140.

Comme on peut le voir sur la figure 6, les bords supérieurs de ces lamelles secondaires 14 s'étendent dans un plan horizontal qui est situé légèrement plus bas que le plan horizontal dans lequel s'étendent les bords supérieurs des lamelles principales 12.

Cet exemple de modèle de caillebotis montre donc que les saletés peuvent se loger dans de nombreux recoins, difficilement accessibles, ce qui rend difficile et complexe son lavage.

L'invention a pour but de remédier à ces inconvénients de l'état de la technique et de fournir une installation permettant un lavage plus rapide et plus performant, tout en simplifiant la tâche de l'opérateur.

Cette installation de lavage doit également permettre d'effectuer des économies d'eau et d'énergie par rapport à la technique antérieure de lavage manuel.

A cet effet, l'invention concerne une installation de lavage d'objets comportant une grille, tels que des caillebotis.

Conformément à l'invention, elle comprend un bâti, supportant un convoyeur permettant le déplacement en translation de l'objet à laver et au moins un dispositif de lavage, comprenant une tête de lavage, équipée d'une buse de pulvérisation d'un jet de liquide de lavage, ladite tête de lavage étant montée sur une plaque support, apte à se déplacer en translation dans un plan horizontal situé au dessus ou en dessous dudit convoyeur, de façon que le jet de liquide de lavage soit orienté en direction de l'objet à laver et ladite tête de lavage est munie de moyens permettant d'incliner angulairement l'axe de sortie du jet de liquide de lavage, par rapport à la verticale, et de moyens de rotation, permettant de la déplacer, par rapport à ladite plaque support, entre au moins deux positions angulaires sensiblement à 180° l'une de l'autre.

Selon d'autres caractéristiques avantageuses et non limitatives de l'invention, prises seules ou en combinaison :
- la plaque support du dispositif de lavage est apte à se déplacer selon un axe perpendiculaire à l'axe de déplacement dudit objet à laver sur le convoyeur ;
- l'installation comprend deux dispositifs de lavage, la plaque support de l'un se déplaçant au-dessus dudit convoyeur et la plaque support de l'autre se déplaçant en dessous dudit convoyeur ;
- l'installation comprend des moyens de réglage permettant de faire varier l'angle d'inclinaison entre l'axe de sortie du jet de liquide de lavage et la verticale ;
- lesdits moyens de réglage sont activés par un moteur, sous le contrôle d'une unité centrale de commande ; il s'agit par exemple d'un vérin ;
- les moyens de rotation comprennent un palier de roulement dont la bague extérieure fixe est solidaire de ladite plaque support et dont la bague intérieure supporte ladite tête de lavage, cette bague intérieure étant entraînée en rotation au moyen d'un moteur, sous le contrôle d'une unité centrale de commande ;
- l'installation comprend un capteur de la position angulaire de ladite tête de lavage, asservi à un moteur de commande des moyens de rotation, sous l'action d'une unité centrale de commande, de façon à déplacer ladite tête de lavage d'une position angulaire à la suivante ;
- ladite buse de pulvérisation est une buse à jet rotatif.

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
- les figures 1 et 2 sont respectivement des vues schématique de face en coupe partielle, et de dessus, d'une partie de l'installation de lavage conforme à l'invention, la tête de lavage ayant été omise sur la figure 2 à des fins de simplification ;
- les figures 3, 4 et 5 sont respectivement des vues schématiques, de face, de côté et de dessus d'une installation de lavage conforme à l'invention, et
- la figure 6 est une vue en perspective, schématique, d'un modèle de caillebotis d'élevage, susceptible d'être nettoyé par l'installation de lavage précitée.

Dans la suite de la description et des revendications et par convention, les références aux directions horizontales et verticales et aux termes "supérieur" ou "inférieur" sont à considérer par rapport à la position normale d'utilisation d'un caillebotis d'élevage ou de l'installation de lavage lorsque celle-ci est posée sur le sol.

La grille 10 s'étend dans un plan horizontal P délimité par un axe longitudinal **X-X'** et un axe transversal perpendiculaire **Y-Y'**. La direction verticale est symbolisée par l'axe **Z-Z'**.

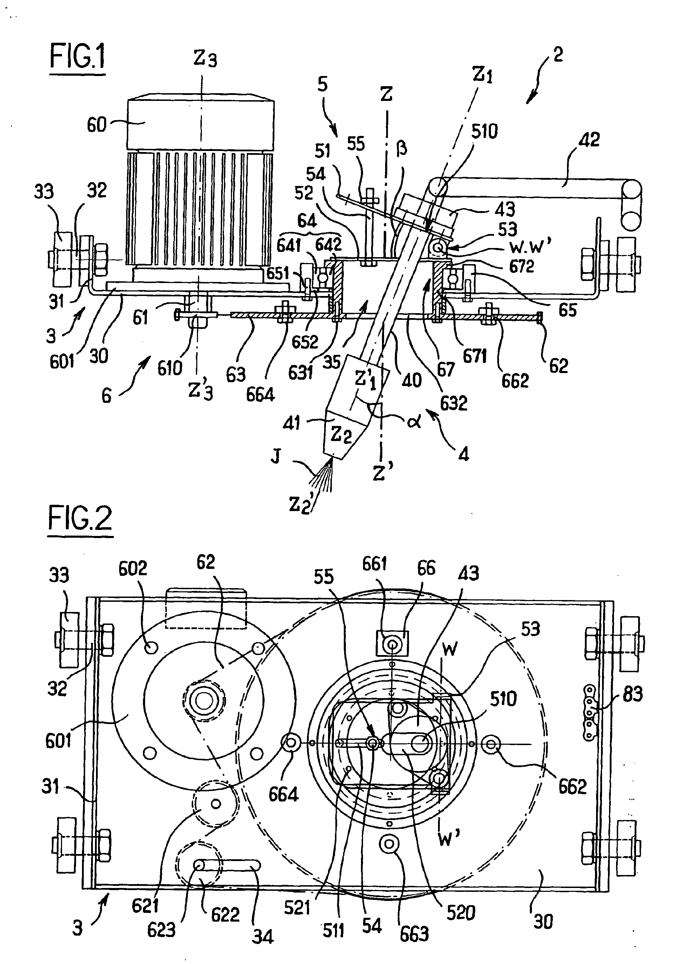

L'installation de lavage comprend un sous-ensemble, dénommé ci-après "dispositif de lavage", qui va maintenant être décrit en faisant référence aux figures 1 et 2.

On notera qu'un tel dispositif pourrait être utilisé seul, en tant qu'unité de lavage indépendante, déplacée par tous moyens appropriés au-dessus ou au-dessous d'une grille à laver, parallèlement au plan **P** de celle-ci.

Le dispositif de lavage 2 comprend une tête de lavage 4, montée sur un chariot 3, mobile en translation.

La tête de lavage 4 est munie, d'une part, de moyens d'inclinaison 5 permettant d'incliner par rapport à la verticale l'axe de sortie du jet de liquide de lavage qu'elle délivre, et d'autre part, de moyens de rotation 6 permettant de la déplacer entre au moins deux positions angulaires sensiblement à 180 degrés l'une de l'autre.

Ces divers éléments vont maintenant être décrits plus en détail.

Le chariot 3 comprend une plaque support rectangulaire 30, munie de galets de roulement 33. Cette plaque constitue la référence horizontale du dispositif et ses deux côtés opposés de plus petite longueur sont repliés verticalement vers le haut, de façon à constituer des bords 31.

Chaque galet 33 est monté fou autour d'un axe de rotation 32 horizontal solidaire du bord 31.

Chaque axe 32 est fixé sur le bord 31, par exemple par vissage, de façon à faire saillie vers l'extérieur, perpendiculairement à celui-ci.

Chaque bord 31 du chariot 3 est équipé d'au moins deux galets de roulement 33.

Enfin, bien que cela ne soit pas représenté sur les figures 1 et 2, de chaque côté du chariot 3, les galets 33 sont susceptibles d'être reçus dans un rail de guidage en C, de sorte que ledit chariot 3 peut-être déplacé en translation parallèlement à ceux-ci.

La tête de lavage 4 comprend un tube rectiligne 40 dont l'extrémité inférieure est munie d'une buse de pulvérisation 41 et dont l'extrémité supérieure est reliée, via un tuyau souple 42, à une source d'alimentation en liquide de lavage, non représentée sur la figure.

L'extrémité supérieure du tube 40 est montée solidaire d'un joint tournant 43, de sorte que le tube 40 peut tourner sur lui-même autour de son axe central longitudinal **Z₁-Z'₁** et que le tuyau souple 42 peut suivre les mouvements de déplacement de la tête de lavage 4 qui seront décrits ultérieurement, sans s'entortiller sur lui-même, le tout en assurant l'étanchéité.

Le liquide de lavage est avantageusement de l'eau chaude. Toutefois d'autres liquides de lavage ou détergents pourraient également être utilisés.

La buse de pulvérisation 41 projette un jet J de liquide de lavage, sous haute pression, en direction de la surface supérieure ou inférieure de la grille à laver.

Le jet **J** ainsi formé peut avoir la forme d'un faisceau (lame) triangulaire de faible épaisseur ou d'un cône.

De façon avantageuse, cette buse de pulvérisation 41 peut également être une buse rotative, par exemple celle commercialisée par la société Kärcher sous la dénomination "Rotabuse". Une telle buse de pulvérisation délivre un jet conique tournant sur lui-même à très grande vitesse, autour d'un axe pivotant angulairement autour d'un axe central médian.

Quelle que soit sa forme, le jet **J** de liquide de lavage présente un axe de sortie central médian **Z₂-Z'₂** qui, dans le mode de réalisation illustré sur la figure 1 est aligné avec l'axe **Z₁-Z'₁** du tube 40.

Conformément à l'invention, la tête de lavage 4 a principalement pour but de nettoyer les faces verticales 120, 140 des lamelles verticales 12, 14 tandis que la plaque support 30 se déplace dans un plan parallèle au plan horizontal P de la grille 10.

L'axe de sortie **Z₂-Z'₂** du jet **J** doit donc être incliné angulairement d'un angle α par rapport à la verticale **Z-Z'** pour garantir un lavage efficace desdites faces verticales 120, 140.

Cet angle α est compris entre 0 et 90°.

Selon le mode de réalisation illustré sur la figure 1, la tête de lavage 4 est munie de moyens d'inclinaison 5 permettant d'atteindre ce but.

Ces moyens d'inclinaison 5 comprennent deux plaques sensiblement rectangulaires de petites dimensions, respectivement une plaque supérieure référencée 51 et une plaque inférieure 52.

La plaque 52 est fixée par l'intermédiaire de quatre vis de fixation, référencées 521, sur un moyeu 67 qui sera décrit ultérieurement.

Les deux plaques 51 et 52 sont articulées l'une par rapport à l'autre le long de l'un de leurs côtés de plus petite longueur par l'intermédiaire d'une charnière 53 d'axe longitudinal horizontal **W-W'.**

Le joint tournant 43 est fixé sur la face supérieure de la plaque supérieure 51, par tout moyen de fixation approprié, et cette plaque 51 présente un orifice circulaire 510 autorisant le passage du tube 40.

Par ailleurs la plaque inférieure 52 présente un orifice oblong 520 situé sensiblement en regard de l'orifice 510. Il s'étend longitudinalement selon un axe perpendiculaire à l'axe **W-W'** de la charnière 53 et autorise le passage du tube 40.

En fonction de l'inclinaison de la plaque 51 par rapport à la plaque 52 horizontale, c'est-à-dire en fonction de la valeur de l'angle β entre ces deux plaques, le tube 40 occupe une position plus ou moins inclinée par rapport à la verticale **Z-Z'** et peut se déplacer à l'intérieur de l'orifice oblong 520.

On notera que le tube 40 étant monté perpendiculaire à la plaque 51, les valeurs des angles α et β sont identiques.

L'angle β d'inclinaison peut être modifié, par des moyens activés manuellement ou automatiquement.

Selon une première variante de réalisation, illustrée sur les figures, une tige filetée 54, est fixée sur la plaque 52 et s'étend verticalement au-dessus de celle-ci.

La plaque supérieure 51 présente un orifice oblong étroit 511 dont l'axe longitudinal est perpendiculaire à l'axe **W-W'** de la charnière 53.

Un opérateur peut déplacer manuellement la plaque 51 pour faire varier la valeur de l'angle d'inclinaison β. La tige filetée 54 peut se déplacer à l'intérieur de l'orifice 511 en faisant saillie verticalement hors de celui-ci.

Un écrou 55 vissé sur l'extrémité libre de la tige filetée 54 permet de fixer l'inclinaison de la plaque 51.

Selon une seconde variante de réalisation de l'invention, non représentée sur les figures, la tige filetée 54 et l'écrou 55 peuvent être supprimés et le réglage de l'angle d'inclinaison β peut être assuré par un vérin, notamment un vérin à double effet, par exemple hydraulique.

Ce vérin peut être installé entre les plaques 51 et 52.

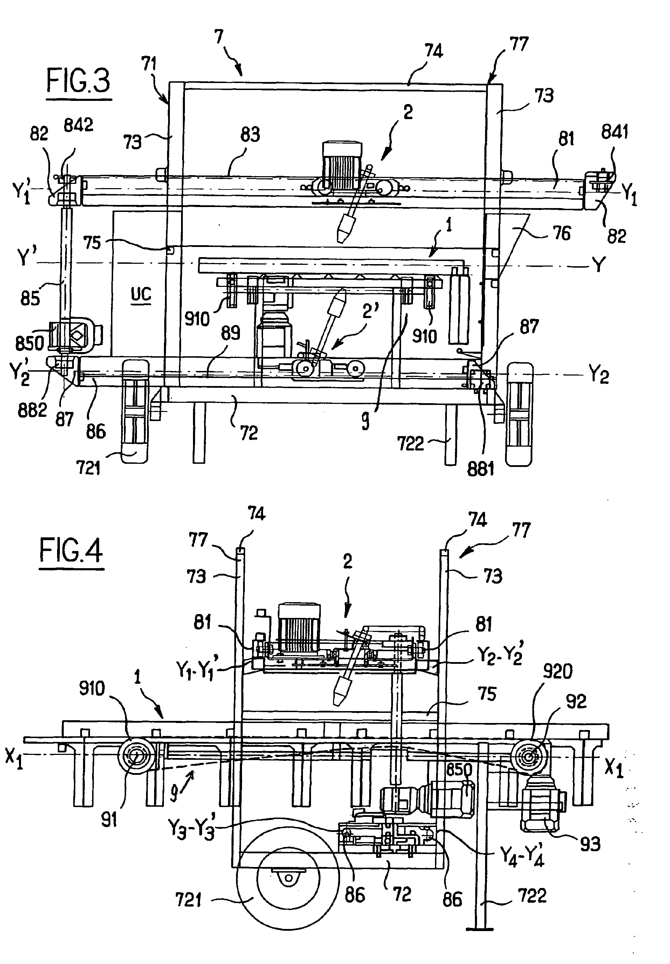

Le fonctionnement de ce vérin peut être piloté par un moteur, sous l'action d'une unité centrale **UC**, représentée sur la figure 3.

Selon une autre variante de réalisation non représentée sur les figures, le tube 40 peut être monté vertical et les moyens d'inclinaison 5 sont alors placés entre le tube 40 et la buse 41, le but final étant toujours d'incliner angulairement l'axe de sortie **Z₂-Z'₂** du jet **J** par rapport à la verticale **Z-Z'.**

Le réglage de l'angle d'inclinaison α du jet de liquide est sélectionné par l'opérateur, pour avoir le meilleur angle d'attaque par rapport à la surface à nettoyer.

Ce réglage peut être intéressant lorsque l'objet à nettoyer présente une structure complexe, dont toutes les surfaces ne sont pas verticales, par exemple certaines parties des pieds 11 du caillebotis 1 ou une caisse dont seules certaines parties sont alvéolées.

Le dispositif de lavage a également pour objectif de nettoyer les quatre faces verticales de chaque alvéole 13 à la grille 10. A cet effet, la tête de lavage 4 est munie de moyens de rotation 6 permettant de la déplacer dans quatre positions angulaires différentes.

Ces moyens de rotation 6 comprennent un palier de roulement 64 qui supporte un moyeu 67 solidaire d'un plateau annulaire denté 63, ce dernier étant susceptible d'être déplacé dans différentes positions angulaires successives par un moteur 60.

La bague extérieure 641 du palier 64 est maintenue fixe par un support annulaire 65, fixé sur la plaque support 30, par exemple au moyen de plusieurs vis 651.

Plus précisément, le support 65 présente un rebord inférieur 652 annulaire s'étendant horizontalement vers l'intérieur et sur lequel repose ladite bague extérieure 641.

Le moyeu 67 comprend une portion tubulaire verticale 671 qui dans sa partie supérieure se prolonge légèrement vers l'extérieur par une aile annulaire 672.

Le diamètre extérieur de la portion tubulaire 671 correspond sensiblement au diamètre intérieur de la bague intérieure 642 du palier 64 de façon à pouvoir être logé à l'intérieur de celle-ci.

L'aile 672 fait légèrement saillie vers l'extérieur de façon à venir en appui sur la bague intérieure 642 sans toutefois atteindre la bague extérieure 641

La hauteur du moyeu 67 est supérieure à celle du palier 64 et ce moyeu 67 s'étend verticalement vers le bas à travers un orifice 35 ménagé dans la plaque support 30. La portion tubulaire 671 du moyeu 67 fait ainsi saillie sous la plaque support 30.

Le moyeu 67 est donc mobile en rotation par rapport à la plaque support 30.

Le plateau annulaire 63 est disposé sous la plaque support 30 et fixé à l'extrémité inférieure de la portion tubulaire 671 du moyeu 67, par exemple au moyen de vis 631. Il est donc solitaire en rotation du moyeu 67 et de la plaque inférieure 52.

Le plateau 63 présente un orifice central 632 au travers duquel s'étend le tube 40 de la tête de lavage 4.

Un moteur 60, par exemple un moteur électrique, est fixé sur la plaque support 30 par l'intermédiaire d'une collerette 601 et au moyen de vis 602.

Son arbre de sortie 61 s'étend verticalement selon un axe **Z₃-Z'₃** à travers la plaque support 30 et fait saillie en dessous de celle-ci.

L'extrémité libre de cet arbre 61 porte un pignon 610 denté qui par l'intermédiaire d'une chaîne 62 entraîne en rotation le plateau denté 63.

De façon avantageuse, deux pignons de renvoi 621, 622 sont fixés sous la plaque support 30 et supportent également la chaîne 62.

L'axe vertical 623 du pignon 622 peut être déplacé à l'intérieur d'une fente oblongue 34 ménagée dans le plateau support 30, le réglage de la position du pignon 622 modifiant la tension de la chaîne 62.

La rotation de l'arbre 61 entraîne celle du pignon 610 et par l'intermédiaire de la chaîne 62 consécutivement celle du plateau 63, du moyeu 67 et du dispositif d'inclinaison 5 qui supporte la tête de lavage 4.

Quatre plots de positionnement portant respectivement les références numériques 661, 662, 663 et 664 sont montés sur le plateau rotatif 63 de façon équidistante du centre de celui-ci. En outre, un capteur de position 66 est fixé sur la plaque support 30 en regard de la trajectoire circulaire parcourue par ces plots de positionnement lors de la rotation du plateau 63.

Le capteur de position 66 est par exemple un capteur magnétique et les plots de positionnement 661, 662, 663 et 664 sont alors métalliques.

Le moteur 60 est asservi au capteur de position 66 et ce dernier joue le rôle de micro-interrupteur lorsqu'il détecte la présence de l'un des plots de positionnement 661, 662, 663 ou 664.

Sous l'action d'une unité centrale de commande non représentée sur les figures 1 et 2, le moteur 60 est activé ce qui a pour effet d'entraîner la rotation du plateau 63. Lorsque l'un des plots de positionnement 661, 662, 663 ou 664 parvient devant le capteur de position 66, celui-ci le détecte et commande l'arrêt du moteur 60.

Les quatre plots de positionnement 661, 662, 663 et 664 permettent ainsi de faire pivoter la tête de lavage 4 d'un quart de tour à chaque fois. Ceci permet de nettoyer les quatre faces d'une alvéole 13.

Un exemple d'un cycle de lavage complet de ce dispositif sera décrit ultérieurement.

Lorsque la grille 10 à laver ne présente que des séries de lamelles parallèles entre elles, le nombre des plots de positionnement sera réduit à deux, espacés de 180°.

D'une manière générale, le nombre des plots de positionnement est adapté au nombre de positions angulaires différentes que l'on souhaite voir occuper par la tête de lavage 4, ce nombre pouvant être supérieur à quatre.

Les moyens de rotation 6 qui viennent d'être décrits pourraient également être miniaturisés. Le moteur 60, le capteur 66 et les plots de positionnement pourraient être remplacés, par exemple, par un moteur pas à pas, qui piloterait la rotation de la tête de lavage 4, sous le contrôle de l'unité centrale **UC**.

L'installation de lavage 7 représentée sur les figures 3 à 5 inclut le dispositif de lavage 2 précédemment décrit. Cette installation permet notamment le lavage de caillebotis, tels que des caillebotis d'élevage ou de cageots.

L'installation 7 comprend un bâti 71 formé d'un assemblage de profilés métalliques.

Le bâti 71 comprend un socle rectangulaire 72 surmonté par deux portiques 77 ayant la forme d'un **U** inversé.

Le socle 72 est muni de deux ou quatre roues 721 permettant son déplacement et de deux pieds de stabilisation 722.

Quatre montants verticaux 73 sont soudés aux quatre coins du socle 72.

Comme cela apparaît mieux sur la figure 3, ces montants 73 sont reliés deux à deux au niveau de leur partie supérieure par une traverse 74 de façon à définir les deux portiques 77. Les deux traverses 74 sont parallèles.

En outre, les deux montants 73 situés d'un même côté du socle 72 sont reliés entre eux au niveau de leur partie médiane par un longeron 75 qui apparaît mieux sur la figure 4.

Chaque portique 77 supporte sensiblement aux deux tiers de sa hauteur un profilé en **C** 81 qui s'étend parallèlement à la traverse 74 selon un axe **Y₁-Y'₁,** respectivement **Y₂-Y'₂** pour l'autre profilé 81.

Ces deux profilés en **C** 81 débouchent l'un en regard de l'autre et reçoivent les galets de roulement 33 du chariot 3, de façon que celui-ci puisse se déplacer en translation dans un plan horizontal (de gauche à droite et inversement sur la figure 3).

De chaque côté, les deux extrémités du profilé en **C** 81 sont reliées par un longeron 82, de façon à définir un cadre rectangulaire.

Une chaîne 83 formant une boucle sans fin est tendue entre deux pignons 841, 842 d'axe vertical, chaque pignon étant fixé respectivement au niveau de l'un desdits longerons 82, comme cela apparaît mieux sur les figures 3 et 5.

L'un des pignons 841 est monté fou tandis que l'autre 842 est solidaire d'un arbre 85 vertical entraîné en rotation par un moteur 850.

Comme représenté sur la figure 2, quelques maillons de la chaîne 83 sont fixés, par exemple pincés, au niveau de l'un des bords 31 du chariot 3.

La rotation de l'arbre 85 et consécutivement celle du pignon 842 entraîne le déplacement de la chaîne 83 et le mouvement de translation du chariot 3 du dispositif de lavage 2.

De façon similaire, deux profilés en C 86 sont fixés sur le socle 72. Ils s'étendent selon des axes longitudinaux **Y₃-Y'₃,** respectivement **Y₄-Y'₄** horizontaux et parallèles aux traverses 74.

Les deux profilés en **C** 86 sont reliés deux à deux à leurs deux extrémités par deux longerons 87.

De façon similaire à ce qui a été décrit précédemment, une chaîne 89 formant une boucle sans fin est tendue entre deux pignons 881, 882 d'axe vertical, chaque pignon étant fixé respectivement au niveau de l'un desdits longerons 87.

L'un des pignons 881 est monté fou tandis que l'autre 882 est solidaire de l'arbre 85 vertical précité.

Un dispositif de lavage 2' similaire ou identique au dispositif 2 est monté entre les profilés en **C** 86 de façon à pouvoir se déplacer en translation entre ceux-ci.

Selon une variante de réalisation simplifiée, le dispositif de lavage 2' ne comprend pas de moyens de rotation 6.

Quelques maillons de la chaîne 89 sont pincés sur le chariot de ce dispositif de lavage 2'.

La rotation de l'arbre 85 et consécutivement celle du pignon 882 provoque ainsi le déplacement de la chaîne 89 et le mouvement de translation du dispositif de lavage 2'.

L'actionnement du moteur 850 entraîne la rotation de l'arbre 85 et des deux pignons moteurs 842, 882 et le déplacement en translation simultané des deux dispositifs de lavage 2 et 2'. Il est ainsi possible de laver les deux faces opposées de la grille 10 du caillebotis 1.

Enfin, un convoyeur 9 est disposé entre le dispositif de lavage supérieur 2 et le dispositif inférieur 2'. Ce convoyeur 9 assure le déplacement en translation de l'objet à laver, ici le caillebotis.

La structure d'un tel convoyeur est classique et ne sera pas décrite en détail.

Ce convoyeur 9 comprend à ses deux extrémités opposées deux axes parallèles 91, 92, chacun portant à ses deux extrémités respectives deux pignons dentés référencés 910, respectivement 920.

L'axe 92 est entraîné en rotation par un moteur 93.

En outre, de chaque côté du convoyeur 9, une chaîne 94 repliée pour former une boucle sans fin s'étend entre un pignon 910 et un pignon 920 situé du même côté.

La rotation de l'arbre 92 entraîne le déplacement des deux chaînes 94 et l'avancement du caillebotis 1 qui est posé à l'une des extrémités du convoyeur 9. Cet avancement s'effectue pas à pas comme cela sera décrit ci-après.

Une unité centrale **UC** commande l'ensemble du fonctionnement des moteurs 60, 850 et 93, selon un exemple de cycle de lavage décrit ci-après.

L'opérateur place l'objet à laver, ici le caillebotis 1, sur le convoyeur 9. Le moteur 93 entraîne le déplacement du convoyeur 9 jusqu'à ce que l'extrémité avant du caillebotis 1 qui est posé dessus se trouve placée entre les deux unités de lavage opposées 2 et 2'. Le moteur 93 est ensuite arrêté, de sorte que le convoyeur 9 est bloqué.

Le moteur 850 est alors activé de façon que les dispositifs de lavage 2 et 2' soient déplacés en translation par exemple de gauche à droite sur la figure 3, la tête de lavage 4 étant dans une première position angulaire de lavage. Dans cette position elle lave toutes les premières faces des alvéoles 13 sur une bande d'une largeur voisine, par exemple, de dix centimètres.

Lorsque les dispositifs de lavage 2, 2' arrivent aux extrémités des profilés en **C** 81, respectivement 86, les moteurs 60 sont activés jusqu'à ce que le capteur de position 66 détecte que la tête de lavage 4 a fait un quart de tour.

Les moteurs 60 sont alors arrêtés et le moteur 850 est alors activé de nouveau pour entraîner le déplacement en translation de la droite vers la gauche de la figure 3 des dispositifs de lavage 2 et 2'. Ainsi sont lavées les secondes faces des alvéoles 13.

Le déplacement en translation des dispositifs de lavage 2 et 2' et la rotation des têtes de lavage 4 est encore répété deux fois jusqu'à ce que les troisième et quatrième faces des alvéoles 13 soient lavées.

Le moteur 93 est ensuite activé de nouveau pour entraîner le déplacement du convoyeur 9, de façon à assurer le lavage de la partie du caillebotis 1, contiguë à la bande du caillebotis qui vient d'être lavée. Le même cycle de lavage et de déplacement des dispositifs de lavage 2 et 2' et des têtes de lavage 4 est répété jusqu'à ce que la totalité du caillebotis 1 ait été lavée.

Il est également possible de stopper la plaque support 30 en un point donné, puis de faire pivoter les moyens de rotation 6 et simultanément d'activer les moyens de commande de la variation de l'angle d'inclinaison α de l'axe de sortie **Z₂-Z'₂** du jet **J** de liquide de lavage. Le jet de liquide décrit ainsi une spirale.

La plaque 30 peut ensuite être de nouveau déplacée, pour procéder au lavage d'une surface voisine.

De façon avantageuse, le bâti 71 comprend également un déflecteur 76 disposé entre deux montants 73 de deux portiques 77 distincts. Ainsi, le jet de liquide de lavage fournit par le dispositif de lavage inférieur 2' vient buter sur ce déflecteur puis est renvoyé en direction des pieds 11 du caillebotis 1, ce qui facilite le lavage de toutes les faces de ceux-ci.

L'installation 7 permet ainsi le lavage de tous types d'objets comprenant une grille et dont les dimensions permettent leur déplacement sur un convoyeur 9 et notamment les caillebotis d'élevage 1 décrits précédemment conjointement avec la figure 6.

## Revendications

1. Installation (7) de lavage d'objets comportant une grille (10), tels que des caillebotis (1), comprenant une tête de lavage (4), équipée d'une buse de pulvérisation (41) d'un jet (**J**) de liquide de lavage, **caractérisée en ce qu'**elle comprend un bâti (71), supportant un convoyeur (9) permettant le déplacement en translation de l'objet à laver et au moins un dispositif de lavage (2), ladite tête de lavage (4) étant montée sur une plaque support (30), apte à se déplacer en translation dans un plan horizontal situé au dessus ou en dessous dudit convoyeur (9), de façon que le jet (J) de liquide de lavage soit orienté en direction de l'objet à laver et **en ce que** ladite tête de lavage (4) est munie de moyens (51, 53) permettant d'incliner angulairement l'axe de sortie **Z**₂-**Z**'₂ du jet (J) de liquide de lavage, par rapport à la verticale **Z**-**Z**', et de moyens de rotation (6), permettant de la déplacer, par rapport à ladite plaque support (30), entre au moins deux positions angulaires sensiblement à 180° l'une de l'autre.

2. Installation de lavage selon la revendication 1, **caractérisée en ce que** la plaque support (30) du dispositif de lavage (2) est apte à se déplacer selon un axe perpendiculaire à l'axe de déplacement dudit objet à laver sur le convoyeur (9).

3. Installation de lavage selon la revendication 1 ou 2, **caractérisée en ce qu'**elle comprend deux dispositifs de lavage (2), la plaque support (30) de l'un se déplaçant au-dessus dudit convoyeur (9) et la plaque support (30) de l'autre se déplaçant en dessous dudit convoyeur (9).

4. Installation de lavage selon l'une quelconque des revendications précédentes, **caractérisée en ce qu'**elle comprend des moyens de réglage permettant de faire varier l'angle d'inclinaison (α) entre l'axe de sortie **Z**₂-**Z**'₂ du jet (**J**) de liquide de lavage et la verticale **Z**-**Z**'.

5. Installation de lavage selon la revendication 4, **caractérisée en ce que** lesdits moyens de réglage sont activés par un moteur, sous le contrôle d'une unité centrale de commande (**UC**).

6. Installation de lavage selon la revendication 5, **caractérisée en ce que** lesdits moyens de réglage sont constitués par un vérin.

7. Installation de lavage selon l'une quelconque des revendications précédentes, **caractérisée en ce que** les moyens de rotation (6) comprennent un palier de roulement (64) dont la bague extérieure fixe (641) est solidaire de ladite plaque support (30) et dont la bague intérieure (642) supporte ladite tête de lavage (4), cette bague intérieure (642) étant entraînée en rotation au moyen d'un moteur (60), sous le contrôle d'une unité centrale de commande (**UC**).

8. Installation de lavage selon l'une quelconque des revendications précédentes, **caractérisée en ce qu'**elle comprend un capteur (66) de la position angulaire de ladite tête de lavage (4), asservi à un moteur (60) de commande des moyens de rotation (6), sous l'action d'une unité centrale de commande (**UC**), de façon à déplacer ladite tête de lavage (4) d'une position angulaire à la suivante.

9. Installation de lavage selon l'une quelconque des revendications précédentes, **caractérisée en ce que** ladite buse de pulvérisation (41) est une buse à jet rotatif

## Claims

1. An installation (7) for the washing of objects, including a grill (10), such as a duckboard (1), including a washer head (4), equipped with a nozzle (41) to spray a jet (J) of wash liquid **characterised in that** it includes a frame (71), supporting a conveyor (9) following the movement of translation of the object to be washed, and at least one washing device (2), the said washer head (4) being mounted on a support plate (30), adapted to move in translation in a horizontal plane located above or below the said conveyor (9), so that the jet (J) of wash liquid is oriented in the direction of the object to be washed, and **in that** the said washer head (4) is fitted with means (51, 53) used to angle the output axis Z₂-Z'₂ of the jet (J) of wash liquid in relation to the vertical Z-Z', and rotation means (6) following to move it in relation to the said support plate (30), between at least two angular positions separated from each other substantially 180 degrees.

2. The washing installation according to claim 1, **characterised in that** the support plate (30) of the washing device (2) is adapted to move along an axis perpendicular to the axis of movement of the said object to be washed on the conveyor (9).

3. The washing installation according to claim 1 or 2, **characterised in that** it includes two washing devices (2), the support plate (30) of one of these moving above the said conveyor (9) and the support plate (30) of the other moving below the said conveyor (9).

4. The washing installation according to any one of the preceding claims, **characterised in that** it includes adjustment means used to vary the angle (α) between the output axis Z₂-Z'₂ of the jet (J) of wash liquid and the vertical Z-Z'.

5. The washing installation according to claim 4, **characterised in that** the said adjustment means are driven by a motor, under the control of a central control unit (UC).

6. The washing installation according to claim 5, **characterised in that** the said adjustment means are composed of a screw jack.

7. The washing installation according to any one of the preceding claims, **characterised in that** the rotation means (6) include a bearing (64) whose outer fixed ring (641) is attached to the said support plate (30) and whose inner ring (642) supports the said washer head (4), this inner ring (642) being driven in rotation by means of a motor (60), under the control of a central control unit (UC).

8. The washing installation according to any one of the preceding claims, **characterised in that** it includes a sensor (66) of the angular position of the said washer head (4), slaved to a motor (60) for controlling the rotation means (6), under the action of a central control unit (UC), so as to move the said washer head (4) from one angular position to the next.

9. The washing installation according to any one of the preceding claims, **characterised in that** the said spray nozzle (41) is a nozzle with a rotating jet.

## Patentansprüche

1. Anlage (7) zum Reinigen von Objekten, die ein Gitter (10), wie etwa Gitterroste (1), umfassen, wobei sie einen Reinigungskopf (4) umfasst, der mit einer Düse zum Zerstäuben (41) eines Strahls (J) einer Reinigungsflüssigkeit ausgestattet ist, **dadurch gekennzeichnet, dass** sie ein Gestell (71), das eine Transporteinrichtung (9) trägt, die die Translationsbewegung des zu reinigenden Objekts gestattet, sowie wenigstens eine Reinigungsvorrichtung (2) umfasst, wobei der Reinigungskopf (4) auf einer Trägerplatte (30) montiert ist, die dafür geeignet ist, sich in Translation in einer horizontalen Ebene zu bewegen, die sich oberhalb oder unterhalb der Transporteinrichtung (9) befindet, derart, dass der Strahl (J) der Reinigungsflüssigkeit in Richtung auf das zu reinigende Objekt ausgerichtet ist und **dadurch**, dass der Reinigungskopf (4) mit Mitteln (51, 53), die es gestatten, die Austrittsachse Z₂-Z'₂ des Strahls (J) der Reinigungsflüssigkeit relativ zur Vertikalen Z-Z' im Winkel zu neigen, sowie mit Rotationsmitteln (6) ausgestattet ist, die es gestatten, ihn relativ zur Trägerplatte (30) zwischen wenigstens zwei Winkelpositionen zu bewegen, die im Wesentlichen 180° auseinander liegen.

2. Reinigungsanlage nach Anspruch 1, **dadurch gekennzeichnet, dass** die Trägerplatte (30) der Reinigungsvorrichtung (2) dafür geeignet ist, sich entlang einer Achse senkrecht zur Bewegungsachse des zu reinigenden Objekts auf der Transporteinrichtung (9) zu bewegen.

3. Reinigungsanlage nach Anspruch 1 oder 2, **dadurch gekennzeichnet, dass** sie zwei Reinigungsvorrichtung (2) umfasst, wobei die Trägerplatte (30) der einen sich oberhalb der Transporteinrichtung (9) bewegt und die Trägerplatte (30) der anderen sich unterhalb der Transporteinrichtung (9) bewegt.

4. Reinigungsanlage nach einem der vorhergehenden Ansprüche, **dadurch gekennzeichnet, dass** sie Einstellmittel umfasst, die es gestatten, den Neigungswinkel (α) zwischen der Austrittsachse Z₂-Z'₂ des Strahls (J) der Reinigungsflüssigkeit und der Vertikalen Z-Z' zu verändern.

5. Reinigungsanlage nach Anspruch 4, **dadurch gekennzeichnet, dass** die Einstellmittel durch einen Motor betätigt werden, und dies gesteuert von einer zentralen Steuerungseinheit (UC).

6. Reinigungsanlage nach Anspruch 5, **dadurch gekennzeichnet, dass** die Einstellmittel durch ein Gewinde gebildet werden.

7. Reinigungsanlage nach einem der vorhergehenden Ansprüche, **dadurch gekennzeichnet, dass** die Rotationsmittel (6) ein Wälzlager (64) umfassen, dessen äußerer feststehender Ring (641) fest mit der Trägerplatte (30) verbunden ist und dessen innerer Ring (642) den Reinigungskopf (4) trägt, wobei der innere Ring (642) mittels eines Motors (60) drehend angetrieben wird, und dies gesteuert von einer zentralen Steuerungseinheit (UC).

8. Reinigungsanlage nach einem der vorhergehenden Ansprüche, **dadurch gekennzeichnet, dass** sie einen Sensor (66) für die Winkelposition des Reinigungskopfs (4) umfasst, der in einem Regelkreis mit einem Motor (60) zur Steuerung der Rotationsmittel (6) verbunden ist, und dies unter der Wirkung einer zentralen Steuerungseinheit (UC) und derart, dass der Reinigungskopf (4) von einer Winkelposition zur nächsten bewegt wird.

9. Reinigungsanlage nach einem der vorhergehenden Ansprüche, **dadurch gekennzeichnet, dass** die Zerstäuberdüse (41) eine Rotationsstrahldüse ist.
